# EUROPÄISCHE PATENTSCHRIFT

(11) **EP 1 855 088 B1**
(45) Veröffentlichungstag und Bekanntmachung des Hinweises auf die Patenterteilung: **13.01.2010**
(21) Anmeldenummer: 07009514.6
(22) Anmeldetag: 11.05.2007
(51) Int. Cl.: G01D 11/30, G01N 27/28

(54) **Vorrichtung zum Anbringen eines Sensors an einem Behältnis**
Device for attaching a sensor to a container
Dispositif destiné à l'application d'un capteur sur un récipient

(30) Priorität: 12.05.2006 DE 202006007648 U
(43) Veröffentlichungstag der Anmeldung: 14.11.2007
(73) Patentinhaber: Hamilton Bonaduz AG, CH-7402 Bonaduz (CH)
(72) Erfinder: Furger, Karl, 7412 Scharans (CH)
(74) Vertreter: Trossin, Hans-Jürgen

(56) Entgegenhaltungen:
- DE-A1- 3 643 036
- DE-A1- 3 834 240
- US-A1- 2001 028 865

## Beschreibung

Die vorliegende Erfindung betrifft eine Vorrichtung zum Anbringen eines Sensors zur Analyse von Eigenschaften einer Substanz, insbesondere einer Flüssigkeit, an einem die Substanz enthaltenden Behältnis gemäß dem Oberbegriff des Anspruchs 1.

Solche Vorrichtungen bzw. Armaturen, wie sie etwa aus der WO 83103778 A1 bekannt sind, umfassen einen Sensorträger, der fluiddicht an einem Ansatz befestigbar ist, der als ein Prozessansatz (insbesondere nach außen vorstehender Stutzen oder Flansch) eine in einer Wand des Behältnisses ausgebildete Öffnung umgibt. Der Ansatz kann insbesondere ein in die Wand des Behältnisses eingeschweißter Standardschweißstutzen sein. Solche Standardschweißstutzen haben in der Regel normierte Nennweiten, wobei ein gängiges Maß für die Nennweite 25 mm ist. Da der Sensor in der Regel nicht mit dem Durchmesser der Standardnennweite kompatibel ist, sondern einen kleineren Querschnitt besitzt, ist er in dem Sensorträger der Armatur aufgenommen. Da der Sensorträger mit der Standardnennweite kompatibel ist und daher an dem Standardschweißstutzen befestigt werden kann, kann dieselbe Art von Armatur - bei jeweils Verwendung eines geeigneten Sensorträgers - zur Anbringung unterschiedlicher Arten von Sensoren verwendet werden.

Der Sensor ist in der am Ansatz befestigten Stellung des Sensorträgers so angeordnet, dass er über die Öffnung mit der im Behältnis befindlichen Substanz in Kontakt gebracht werden kann. Gerade im Bereich der Biotechnologie und Lebensmittelindustrie bestehen hohe Anforderungen an die Hygiene von Armaturen, die mit den zu untersuchenden Substanzen, in der Regel Flüssigkeiten mit darin enthaltenen aeroben oder anaeroben Kulturen, in Kontakt gelangen. Die zur Messung von interessierenden Prozessgrößen, insbesondere von chemischen Eigenschaften wie pH-Wert oder Stoffkonzentrationen, verwendeten Sensoren sind darüber hinaus in der Regel in ihrem zeitlichen Verhalten nicht stabil und verändem mit der Zeit ihre Empfindlichkeit gegenüber der zu erfassenden Substanz. Aus diesen Gründen ist es unumgänglich, solche Sensoren in vorgegebenen Zeitabständen zu reinigen oder zu kalibrieren. Hierfür muss der Sensor von der zu untersuchenden Substanz getrennt werden und mit einer Spülsubstanz oder einer Kalibrationssubstanz, in der Regel ebenfalls entsprechende Flüssigkeiten, in Kontakt gebracht werden.

Um den Sensor nicht jedes Mal vom Behältnis demontieren zu müssen, wenn eine Reinigung oder Kalibration ansteht, ist bei solchen Armaturen in dem Sensorträger ein mit dem Sensor in Fluidverbindung stehendes Spülvolumen vorgesehen, das von dem Behältnis abtrennbar sowie mit wenigstens einem Spülfluideingang und wenigstens einem Spülfluidausgang in Fluidverbindung bringbar ist.

Die gattungsgemäße WO 83/03778 A1 zeigt genauer eine als Wechselarmatur ausgebildete Vorrichtung zum Anbringen eines Sensors an einem Reaktorbehälter für den Einsatz in Chemie- und Bioreaktoren, die geeignet ist zur Montage an Standardschweißstutzen kleiner Nennweite, z.B. 25 mm. Bei dieser Wechselarmatur ragt im montierten Zustand ein Sensorträger in das Innere eines Reaktors. In dem Sensorträger ist ein Hubrohr mit einem darin befindlichen Sensor derart aufgenommen, dass es innerhalb des Sensorträgers zwischen zwei Stellungen bewegbar ist, nämlich einer in das Innere des Reaktors hineinreichenden Messposition und einer Spülposition, in der der Sensor sich außerhalb des Reaktorinneren befindet und das Hubrohr die Öffnung in der Reaktorwand abdichtet. Der Sensorträger weist an seinem in das Reaktorinnere ragenden Ende Schlitze auf, durch die in der Ausfahrstellung des Hubrohrs die Prozesssubstanz mit dem Hubrohr und durch darin ausgebildete Sensorfenster mit dem Sensor in Kontakt gelangt. In der Zurückziehstellung des Hubrohrs kann der Sensor von einer Spül- oder Kalibrationsflüssigkeit umspült werden, die über einen im Sensorträger ausgebildeten Spülanschluss für den Zulauf der Spül- oder Kalibrationsflüssigkeit (Spülfluideingang) in ein in dem Sensorträger ausgebildetes Spülvolumen gelangt und über einen weiteren Spülanschluss (Spülfluidausgang) wieder aus der Spülkammer abgeleitet wird.

Da bei einem Standardschweißstutzen mit Nennweite 25 mm zwangsläufig die im Sensorträger angeordneten Spülanschlüsse sich in axialer Richtung des Stutzens in einem relativ großem Abstand zur Reaktorwand befinden, weil der Schweißstutzen sehr weit von der Außenwand des Reaktors absteht, fließt ein großer Teil der in den Sensorträger eintretenden Spül- oder Kalibrationsflüssigkeit vom Spülfluideingang direkt zum Spülfluidausgang ab und erreicht den der Reaktorwand am nächsten liegenden Bereich am Grund des Spülvolumens nicht, in dem sich die Sensorfenster befinden. Daher wird der Sensor nur schlecht von der Spül- oder Kalibrationsflüssigkeit umspült und die im unteren Teil des Spülvolumens befindliche Lösung kaum entfernt (im Falle einer Spülflüssigkeit) oder durchmischt (im Falle einer Kalibrierflüssigkeit). Diese Situation ist aus hygienischen Gründen ungünstig und gerade im Lebensmittelbereich oder Biotechnologiebereich nicht akzeptabel.

In der EP 1 136 818 A2 wird vorgeschlagen, das beschriebene Problem der mangelnden Umspülung des Sensors im Spülvolumen dadurch zu lösen, dass ein speziell angepasster Ansatz verwendet wird, der einen verbreiterten Querschnitt und damit eine geringere axiale Höhe aufweist. Weil in radialer Richtung mehr Platz für das Spülfluid geschaffen wird und dieses zusätzlich in axialer Richtung des Ansatzes näher zum Grund in das Spülvolumen eingeleitet werden kann, verbessert sich die Spülwirkung. Allerdings ist es erforderlich, die Reaktorwand mit einem speziellen Ansatz zu versehen, Standardansätze, etwa die häufig verwendeten 25 mm Schweißstutzen sind nicht nutzbar, so dass bestehende Reaktoren aufwändig umgerüstet werden müssten.

In der DE 102 41 834 A1 ist ein Prozessanschluss gezeigt, der einen speziellen Flanschansatz mit sehr geringer axialer Länge verwendet. An dem in die Reaktorwand eingeschweißten Flanschansatz wird ein mäanderartiger Sensorträger befestigt, in dem eine Spülfluidkammer mit Spülfluideingang und Spülfluidausgang ausgebildet ist. Die Kammer ist derart gestaltet, dass der Spülfluidausgang sich in jeder Einbaulage des Sensorträgers an der tiefsten Stelle der Spülfluidkammer befindet, so dass Spülfluid immer vollständig ablaufen kann.

Die US 2001/0028865 A1 zeigt eine Sensor-Anbringungsvorrichtung, bei welcher ein zur Sensoraufnahme ausgebildeter Sensorträger zwischen einer Messstellung und einer Spülstellung verstellbar in einem Vorrichtungsgehäuse aufgenommen ist. Das Vorrichtungsgehäuse selbst wiederum ist über einen gesondert ausgebildeten Anbringungsflansch an einen Schweißstutzen des Behältnisses montierbar.

Der Erfindung liegt die Aufgabe zugrunde, eine Vorrichtung zum Anbringen eines Sensors zur Analyse von Eigenschaften einer Substanz an einem die Substanz enthaltenden Behältnis bereitzustellen, welche an Standardprozessansätzen, insbesondere Standardschweißstutzen befestigbar ist und dennoch eine verbesserte Durchspülung eines Spülvolumens oder/und Kalibriervolumens für den Sensor gewährleistet.

Erfindungsgemäß wird diese Aufgabe gelöst durch eine Vorrichtung zum Anbringen eines Sensors zur Analyse von Eigenschaften einer Substanz, insbesondere einer Flüssigkeit, an einem die Substanz enthaltenden Behältnis mit allen Merkmalen des Anspruchs 1.

Anstatt das Spülfluid oder/und Kalibrationsfluid direkt in das Spülvolumen einzuleiten, sieht die Erfindung vor, das Spülfluid oder/und Kalibrationsfluid zunächst in einen dem Spülvolumen vorgeschalteten Hohlraum einzuleiten, der mit dem Spülvolumen in Fluidkontakt steht. Der Hohlraum dient als Zuleitung zum Spülvolumen und ist so ausgebildet, dass er vom Spül- oder Kalibrationsfluid im Wesentlichen laminar und gleichmäßig verteilt durchströmt wird. Somit entstehen bei Einleitung des Spül- oder Kalibrationsfluids in das Spülvolumen keine Toträume und keine Rückvermischung. Der Hohlraum kann daher eine Leitfunktion für das Spülfluid oder/und Kalibrationsfluid ausüben, welches von dem Hohlraum über eine oder mehrere geeignet angeordnete Fluidverbindungen in das Spülvolumen gelangt. Damit können bei geeigneter Ausbildung des vorgeschalteten Hohlraums praktisch alle wichtigen Bereiche des Spülvolumens vom Spülfluid oder/und Kalibrationsfluid durchspült werden, insbesondere solche Bereiche, wo hohe hygienische Anforderungen bestehen. Dies ist zum einen die Umgebung der Sensorspitze, weil dort der Sensor messempfindlich ist. Wichtig ist aber auch die gründliche Reinigung von nur schwer zugänglichen Stellen, die beispielsweise in durch die Begrenzungswände gebildeten Ecken des Spülvolumens oder in der Umgebung von Dichtungen zu finden sind. Solche Bereiche stehen häufig in nur schlechtem Fluidkontakt mit dem übrigen Spülvolumen und bilden daher praktisch eigene Totvolumina, die ebenfalls zu spülen wären, aber wegen der schlechten Fluidverbindung kaum vom Spülfluid erreicht können. Der erfindungsgemäße Hohlraum kann auch eine effiziente Spülfluid-Zuleitung für solche Totvolumina sein. Als Beispiel sei hier die Umgebung von Dichtungen genannt, mit denen das Spülvolumen oder der Hohlraum gegenüber dem Behältnis abgedichtet wird. Weil diese Dichtungen in unmittelbarer Nähe oder sogar in Kontakt mit der zu messenden Substanz stehen, bestehen hier ganz besonders hohe Anforderungen an die Hygiene. Gleichzeitig sind sie aber auch sehr weit von den oberhalb des Ansatzes einmündenden Öffnungen für den Einlass und Auslass vom Spülfluid entfernt und werden daher von direkt aus diesen Öffnungen eintretendem und austretendem Spülfluid kaum erreicht.

Ein ganz besonderer Vorteil dieser Anordnung liegt darin, dass das Spülfluid oder/ und Kalibrationsfluid auch zu den ansonsten wegen der ungünstigen Lage der Spülfluideingänge und Spülfluidausgänge weit entfernt vom Grund des Spülvolumens nur schlecht durchspülbaren Bereichen am Grund des Spülvolumens geleitet werden kann, und damit den untersten Punkt des Spülvolumens gewissermaßen zuerst erreicht. Von dort aus kann das Spülfluid oder/und Kalibrationsfluid in der Art einer Diagonalspülung nach oben zum Ausgang fließen. Diese Art der Spülung bzw. Durchmischung ist besonders effektiv. Hierdurch kann insbesondere verhindert werden, dass nach erfolgtem Spülen oder/und Kalibrieren kontaminiertes Spülfluid oder/und Kalibrationsfluid mit undefinierter Zusammensetzung im Spülvolumen zurückbleibt. Die erfindungsgemäß erzielbare gute Reinigbarkeit von Spülvolumen und Sensor ist eine Voraussetzung dafür, dass der Sensor in dem Spülvolumen sterilisiert werden kann.

Der Hohlraum kann als eine an die jeweilige Geometrie von Sensor, Sensorträger und Ansatz angepasste Zuleitung zum Spülvolumen gestaltet sein. Daher kann er insbesondere dafür sorgen, dass die messempfindlichen Bereiche des Sensors (in der Regel an der Spitze des Sensors) mit hohem Druck und von einem großen Volumen an Spülfluid umspült wird oder/und ein Kalibrationsfluid weitgehend homogen und mit definierter Konzentration an die messempfindlichen Bereiche des Sensors gelangt.

Der vorgeschaltete Hohlraum ist zwischen Wänden des Sensorträgers und des Ansatzes gebildet. Er kann, insbesondere wenn der Sensorträger in einen ringförmigen Ansatz der Behältniswand eingesetzt ist, durch eine Außenwand des Sensorträgers und eine Innenwand des Ansatzes gebildet sein. Solche Ansätze sind häufig als sog. Prozessansätze, meist als vorstehender Flansch oder Stutzen in genormten Nennweiten, standardmäßig an Wänden von Reaktoren, Fermentem oder sonstigen in der Lebensmittelindustrie und Biochemie Einsatz findenden Behältnissen vorgesehen.

Erfindungsgemäß ist das Spülvolumen in dem Sensorträger ausgebildet und steht mit dem Sensor in Fluidverbindung. Der Sensorträger kann ein separat vom Sensor ausgebildetes Teil sein. Bei geeigneter Abmessung kann aber auch das Gehäuse des Sensors selbst als Sensorträger dienen.

Zwischen der Wand des Sensorträgers und der Wand des Ansatzes kann eine vorzugsweise als O-Ring-Dichtung ausgebildete Dichtung vorgesehen sein, die den Hohlraum gegenüber dem Innenraum des Behältnisses abdichtet. Die gründliche Reinigung der Umgebung dieser Dichtung ist besonders wichtig und kann durch den erfindungsgemäßen Hohlraum als Zuleitung für Spülfluid zu dieser Umgebung erreicht werden, die auch als ein besonderes Spülvolumen im Sinne der Erfindung angesehen werden kann.

Zwischen dem Sensorträger und dem stirnseitigen Ende des Ansatzes kann eine weitere vorzugsweise als elastische Dichtung oder O-Ring-Dichtung ausgebildete Dichtung vorgesehen sein, um zu verhindern, dass in dem vorgeschalteten Hohlraum befindliches Spülfluid oder/und Kalibrationsfluid austritt.

Der Sensor kann beispielsweise in einem rohrförmigen Gehäuse aufgenommen sein, das fluiddicht in einen in dem Sensorträger ausgebildeten rohrförmigen Hohlraum einführbar ist, wobei das Gehäuse Sensorfenster aufweist, durch die der Sensor in Fluidkontakt mit der Substanz gelangen kann. Das Gehäuse kann ein Gehäuse des Sensors selbst sein, es kann aber auch ein standardisiertes Gehäuse sein, in dem mehrere Arten von Sensoren aufnehmbar sind. Es kann darüber hinaus vorgesehen sein, dass auch das Spülfluid oder/und Kalibrationsfluid durch die Sensorfenster mit dem Sensor in Kontakt gelangen kann.

Bevorzugt ist der Sensor als Wechselarmatur relativ zu dem Ansatz zwischen wenigstens zwei Stellungen verlagerbar ausgebildet, nämlich zwischen einer Messstellung, in der der Sensor so weit durch die Öffnung in das Behältnis ragt, dass die Substanz in Kontakt mit dem Sensor gelangen kann, und einer Spülstellung, in der der Sensor so weit zurückgezogen ist, dass das Spülvolumen von dem Behältnis isoliert ist. Üblicherweise ist in diesem der Sensor ein vom Sensorträger separates Bauteil, das relativ zu dem Sensorträger verlagerbar ist. Wenn der Sensor sich in einem rohrförmigen Gehäuse der beschriebenen Art befindet, ist es günstig, wenn das rohrförmige Gehäuse ein zwischen den beiden Stellungen verfahrbares Hubrohr ist.

Der Sensor kann auch statisch am Ansatz gehalten sein, so dass er nur eine einzige Aufnahmestellung hat und nicht bewegt wird. Bei solchen Anordnungen ragt entweder der Sensor in das Innere des Behältnisses und steht solange mit der Substanz in Kontakt, bis er entfernt wird. Alternativ muss die Substanz durch die Öffnung zum im Außenraum des Behältnisses befindlichen Sensor gelangen. Die letztere Anordnung bietet die Möglichkeit, den Sensor durch Verschließen der Öffnung des Behältnisses zeitweilig vom Innenraum des Behältnisses zu isolieren, etwa um ihn zu reinigen oder kalibrieren zu können. Aber auch bei der ersten Anordnung kann es günstig sein, die Öffnung des Behältnisses zeitweilig fluiddicht zu verschließen, und zwar auch solange der Sensor noch in das Behältnis hineinragt, obwohl dann der Sensor nicht gespült werden kann. Wie oben bereits erläutert wurde, ist es jedoch in manchen Anwendungen, in denen Sterilität eine große Rolle spielt, erforderlich, die Umgebung von Dichtungen, die sich in direktem Kontakt mit der im Behältnis gespeicherten Substanz befinden, regelmäßig zu reinigen und zu sterilisieren. Der erfindungsgemäße Hohlraum kann in diesem Fall als Spülfluid-Zuleitung dazu dienen, ein Spülfluid vom Spülfluideingang unmittelbar zu dem die Dichtung umgebenden Raum zu leiten, sobald die Öffnung zum Behältnis verschlossen ist. Dieser die Dichtung umgebende Raum ist daher ebenfalls als ein Spülvolumen im Sinne der Erfindung anzusehen. Gerade bei dieser Anwendung der Erfindung braucht der Sensorträger nicht unbedingt ein von dem Sensor getrenntes Bauteil zu sein. Vielmehr kann der Sensor auch ein Gehäuse aufweisen, das unmittelbar in den Ansatz eingesetzt werden kann, also etwa eine Umfangswand mit einem Außendurchmesser etwas kleiner als 25 mm im Falle der Verwendung eines 25 mm Standardschweißstutzens als Ansatz. Zwischen dem Ansatz und der Gehäusewand des Sensors wird dann ebenfalls ein als Hohlraum im Sinne der Erfindung nutzbarer schmaler Spalt freigelassen, durch den das Spülfluid vom Spülfluideingang direkt zu der am Grund des Ansatzes angeordneten Dichtung geleitet werden kann.

Der Ansatz kann besonders günstig ein Schweißstutzen mit vorbestimmter Nennweite, z.B. 25 mm sein. Der Schweißstutzen kann beispielsweise ein Außengewinde aufweisen, an dem der Sensorträger mittels einer Überwurfmutter geklemmt wird.

Eine einfache Ausgestaltung ergibt sich, wenn der Sensorträger an seinem an dem Ansatz befestigten Ende einen Umfangswandabschnitt aufweist, der einer Innenwand des Ansatzes gegenüberliegt und die einen zwischen der Innenwand des Ansatzes und dem Umfangswandabschnitt gebildeten im Wesentlichen ringförmigen Spalt begrenzt, der den Hohlraum bildet und in den der Spülfluideingang mündet. Der Umfangswandabschnitt bildet dann eine Spülfluidleitanordnung, die den ringförmigen Hohlraum vom Spülvolumen trennt.

Vorzugsweise sollte das Spülfluid oder/und Kalibrationsfluid in dem zwischen der Wand des Sensorträgers und der Wand des Ansatzes gebildeten Hohlraum in axialer Richtung des Ansatzes bis in den der Außenwand des Behältnisses benachbarten Bereich, der den Grund des Spülvolumens bildet, geleitet werden. Die Fließbewegung kann dabei in erster Linie in axialer Richtung sein, es kann aber auch günstig sein, wenn die Fließbewegung des Spülfluids oder/und Kalibrationsfluids eine Komponente entlang des Umfangs des Ansatzes hat. Beispielsweise kann in dem zwischen dem Umfangswandabschnitt und der Innenwand des Ansatzes gebildeten Hohlraum ein sich spiralförmig zum Grund des Spülvolumens erstreckender Spülfluidkanal für das Spülfluid oder/und Kalibrationsfluid gebildet sein.

In der den Hohlraum vom Spülvolumen trennenden Wand des Sensorträgers kann wenigstens eine Öffnung gebildet sein, durch die Spülfluid oder/und Kalibrationsfluid in das Spülvolumen gelangt. Die Öffnung kann ein punktförmiges Loch oder ein Schlitz sein. Wenn die Wand ein Umfangswandabschnitt im oben definierten Sinn ist, kann die Öffnung beispielsweise als ringförmiger Schlitz um den Umfang des Umfangswandabschnitts herum ausgebildet sein. Es kann auch vorgesehen sein, dass eine Mehrzahl von Öffnungen in unterschiedlicher axialer Höhe zwischen dem Spülfluideingang und dem Grund des Spülvolumens angeordnet sind. Man erhält dann ein Spülvolumen, in das praktisch entlang seiner gesamten axialen Erstreckung ein Strahl von Spülfluid oder/und Kalibrationsfluid mit gleichem Druck eingeleitet wird.

Alle oder nur einige der Öffnungen können gemäß einer Weiterbildung der Erfindung düsenartig ausgebildet sein, so dass sich ein Sprühstrahl mit hohem Druck ergibt. Die Düsen können punktförmig sein oder die Form von Schlitzen haben.

Die Öffnung(en) können radial nach innen weisen und beispielsweise gezielt durch die Sensorfenster im rohrförmigen Gehäuse auf den Sensor oder auf die unterste O-Ring Dichtung am rohrförmigen Gehäuse gerichtet sein. Sie können auch in tangentiale Richtung weisen. Hierdurch können im Spülvolumen Strudel erzeugt werden, die zu einer effektiven Spülung bzw. Durchmischung des Spülfluids oder/und Kalibrationsfluids betragen.

Durch die genannten Arten der Anordnung und konstruktiven Ausgestaltung der Öffnungen kann eine turbulente Strömung bei hohen Reynoldszahlen in dem Spülvolumen erzeugt werden. Dies wird insbesondere durch Erhöhung der Strömungsgeschwindigkeit am Austritt von (düsenartigen) Öffnungen, durch gemischten radialen und tangentialen Austritt des Spülfluids oder/und Kalibrationsfluids sowie durch Einbau von zusätzlichen geeigneten Hindernissen in dem Spülvolumen erreicht.

Der Grund des Spülvolumens kann eine leicht konkave Wölbung haben, um zu vermeiden, dass am Grund des Spülvolumens Reste von Spülfluid oder/und Kalibrationsfluid stehen bleiben.

Der Sensor kann beispielsweise ein Druck- oder Temperatursensor sein. Bevorzugt ist die erfindungsgemäße Vorrichtung für Sensoren zur Messung von chemischen, biochemischen oder elektrochemischen Eigenschaften von Flüssigkeiten geeignet, insbesondere für pH-Sensoren, pO₂-Sensoren, pCO₂-Sensoren oder Sensoren zur Bestimmung der Konzentration von Ionen, Enzymen oder biochemischen Metaboliten.

Die Erfindung wird im folgenden anhand eines Ausführungsbeispiels unter Bezugnahme auf die begleitenden Zeichnungen näher erläutert. Es zeigt:
- Fig. 1: eine Querschnittsansicht durch einen Abschnitt einer erfindungsgemäßen Vorrichtung und
- Fig. 2: eine Seitenansicht auf die in Fig. 1 gezeigte Vorrichtung aus der Sicht von links in Fig. 1.

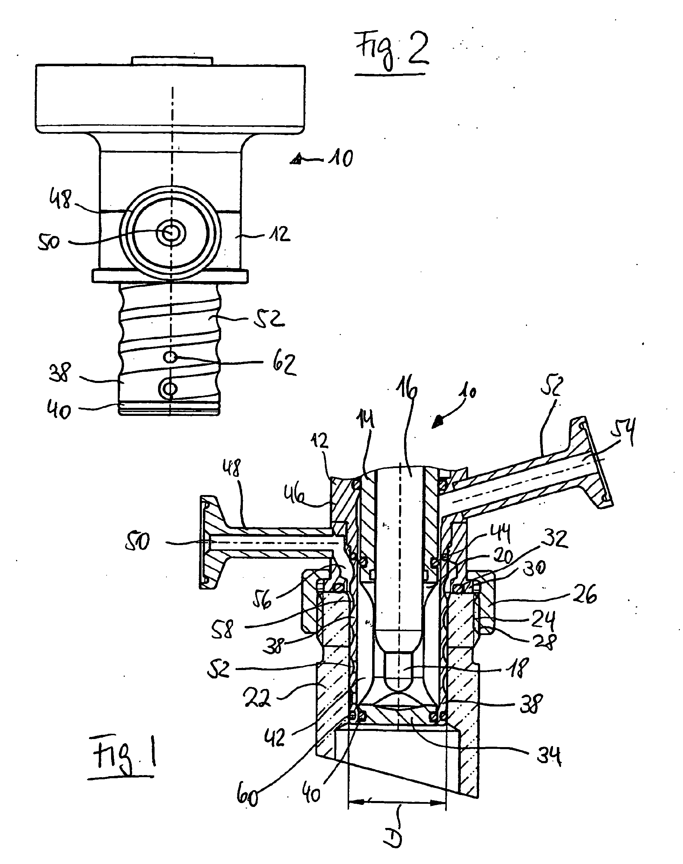

In Fig. 1 ist eine Querschnittsansicht eines Ausschnitts einer allgemein mit 10 bezeichneten erfindungsgemäßen Vorrichtung zum Anbringen eines Sensors zur Analyse von Eigenschaften einer Substanz an einem die Substanz enthaltenden Behältnis abgebildet. Der Ausschnitt zeigt den für die Erfindung bedeutsamen Koppelbereich eines Sensorträgers 12 der Vorrichtung an einem Einschweißstutzen 22 eines Behältnisses. Der Sensorträger 12 hat eine im Wesentlichen zylindrische Gestalt. In dem Sensorträger 12 ist ein ebenfalls zylindrisch in der Form eines Hubrohrs 14 ausgebildetes Sensorgehäuse aufgenommen, in dem sich wiederum ein schematisch dargestellter Sensor 16 zur Analyse der Eigenschaften einer Substanz befindet. Der Sensor 16 kann ein beliebiger der oben genannten Sensoren sein. Sein messempfindlicher Bereich 18 befindet sich an der der schematisch als Kappe dargestellten Spitze des Sensors 16. In dem Hubrohr 14 sind auf Höhe des messempfindlichen Bereichs 18 des Sensors 16 Ausnehmungen gebildet, die als Sensorfenster 20 es gestatten, dass Fluid in den von dem Hubrohr 14 eingeschlossenen Raum eindringt und mit dem messempfindlichen Bereich 18 des Sensors 16 in Kontakt gelangt.

Der Sensorträger 12 ist an dem Einschweißstutzen 22 durch eine Überwurfmutter 26 verschraubt. Der Einschweißstutzen ist in der Wand eines in Fig. 1 nicht näher dargestellten Reaktorgefäßes oder sonstigen Behältnisses, in dem sich die zu untersuchende Substanz befindet, eingeschweißt. Der Einschweißstutzen 22 weist eine an seinem Innendurchmesser gemessene

Nennweite D von 25 mm auf. An seinem der Wand des Behältnisses gegenüberliegenden Ende ist der Einschweißstutzen 22 an seiner Außenseite mit einem Außengewinde 24 versehen, das mit einem an der Überwurfmutter 26 ausgebildeten Innengewinde 28 in Eingriff steht. Die Überwurfmutter 28 liegt an einer nach außen vorstehenden Fläche eines Klemmflanschs 30 des Sensorträgers 12 auf und klemmt die gegenüberliegende Fläche des Flanschs 30 gegen die ringförmige Stirnfläche am freien Ende des Einschweißstutzens. Zwischen dem Flansch 30 und der Stirnfläche des Einschweißstutzens 22 ist eine O-Ringdichtung 32 angebracht, die den durch den Einschweißstutzen 22 und den Sensorträger 12 umschlossenen Raum fluiddicht abschließt.

Der Sensorträger 12 ist in dem in Fig. 1 abgebildeten Abschnitt gebildet durch eine im Wesentlichen zylindrische Umfangswand 46, die an ihrem dem Stutzen 22 zugewandten Ende auf ihrer Außenseite den an der Stirnfläche des Stutzens 22 anliegenden Klemmflansch 30 bildet. Von der Anlagefläche dieses Flanschs 30 am Stirnende des Stutzens 22 aus verläuft die Umfangswand 46 zum axialen Stirnende des Sensorträgers hin als Umfangswandabschnitt 38 mit verringerter Dicke. Die Außenfläche des Umfangswandabschnitts 38 ist dabei in Radialrichtung deutlich zurückgesetzt, so dass der Umfangswandabschnitt 38 in den Stutzen 22 eingeführt werden kann. Die Innenwand der Umfangswand 46 zeigt am Übergang zu dem Umfangswandabschnitt 38 keinen Absatz.

Der Hubkörper 14 ist zwischen zwei Stellungen, einer Spülstellung und einer Messstellung, in axialer Richtung relativ zu dem Sensorträger 12 verlagerbar. In der in Fig. 1 gezeigten zurückgezogenen Stellung, die die Spülstellung bildet, liegt eine Stirnwand 34 des Hubkörpers 14 an der Innenfläche einer Umfangswand 38 des Sensorträgers 12 an, die an dessen der Wand des Behältnisses zugewandtem Ende angeordnet ist und die bis in die Nähe der durch den Schweißstutzen 22 umschlossenen Öffnung reicht, welche in der Wand des Behältnisses ausgebildet ist. Zwischen der radial äußeren Fläche der Stirnwand 34 des Hubrohrs 14 und der radial inneren Fläche der Umfangswand 38 ist ein O-Ring 40 angeordnet, der das zwischen der Stirnwand 34 und der Umfangswand 38 gebildete Volumen, welches das Spülvolumen 42 bildet, fluididicht gegen das Innere des Behältnisses abdichtet. Am gegenüberliegenden axialen Ende wird das Spülvolumen 42 begrenzt durch einen weiteren zwischen der Außenseite der Längswand des Hubrohrs 14 und der Innenseite der Umfangswand 38 des Sensorträgers 12 angeordneten O-Ring 44.

In der in Fig. 1 nicht gezeigten Messstellung ist das Hubrohr 14 so weit in den Innenraum des Behältnisses vorgeschoben, dass die Sensorfenster 20 in das Innere des Behältnisses hineinragen, so dass der messempfindliche Bereich 18 des Sensors 16 mit der im Behältnis befindlichen Substanz gelangt. In dieser Stellung liegt der am Hubrohr 14 in einer Nut gehaltene 0-Ring 44 an der Innenfläche der Umfangswand 38 in deren axialem Endbereich an und dichtet damit die Öffnung im Behältnis nach außen ab.

In der in Fig. 1 gezeigten Spülstellung steht der messempfindliche Bereich 18 des Sensors 16, der im Messbetrieb über die Sensorfenster 20 der im Behältnis gespeicherten Substanz ausgesetzt war, über die Sensorfenster 20 mit dem Spülvolumen 42 in Fluidkontakt. Um Spülfluid oder/und Kalibrationsfluid in das Spülvolumen 42 einzuleiten, ist an dem Sensorträger 12, genauer gesagt an dessen sich in Axialrichtung erstreckender Umfangswand 46 je ein Stutzen 48 angeschweißt, in dem ein als Fluideingang dienender Durchgangkanal 50 ausgebildet ist, und dem Stutzen 48 gegenüberliegend ein Stutzen 52 angeschweißt, in dem ein als Fluidausgang dienender Durchgangkanal 54 ausgebildet ist. Der den Fluidausgang bildende Durchgangskanal 54 mündet direkt in das Spülvolumen 42, so dass im Spülvolumen 42 befindliches Fluid unmittelbar aus dem Spülvolumen in den Durchgangskanal 54 ableitbar ist.

Der den Fluideingang bildende Durchgangskanal 50 mündet in einen in der Umfangswand 46 ausgebildeten Fluidkanal 56, der von der Außenseite der Umfangswand 46 aus diese radial durchsetzt und schräg nach unten zum Grund des Spülvolumens 42 führt. Der Fluidkanal 56 tritt jedoch nicht an der Innenseite der Umfangswand 46 aus, sondern trifft auf Höhe der am Stirnende des Stutzens 22 anliegenden Fläche des Klemmflanschs 30 von außen auf den die Umfangswand 46 zum Grund des Spülvolumens 42 verlängernden Umfangswandabschnitt 38 des Sensorträgers 12. Zwischen dem Umfangswandabschnitt 38, genauer dessen Außenseite, und der Innenseite der den Mantel des Stutzens 22 bildenden Umfangswand ist ein Hohlraum 58 gebildet, der den Fluidkanal 56 fortsetzt. Der Hohlraum 58 ist in etwa ringförmig und verläuft in axialer Richtung von der Anlagefläche des Klemmflanschs 30 bis zu dem mit der Stirnwand des Hubrohrs 16 in fluiddichter Anlage stehenden axialen Ende der Umfangswand 38. In den Hohlraum 58 gelangtes Fluid wird daher in axialer Richtung weitergeleitet, bis es die Höhe des Grunds des Spülvolumens 42 erreicht. Um ein Austreten des Fluids aus dem Hohlraum 58 in das Behältnis für die zu messende Substanz zu verhindern, befindet sich ein O-Ring 60 am axialen Ende des Umfangswandabschnitts 38 zwischen dessen Außenseite und der Innenseite der Mantelwand des Stutzens 22.

Wie insbesondere in Fig. 2 zu sehen ist, ist in der Außenseite des Umfangswandabschnitts 38 des Sensorträgers 12 eine spiralförmig verlaufende Nut 53 eingeschnitten, die in den Fluidkanal 56 übergeht. Durch diese Nut 53 wird ein spiralförmiger Verlauf des durch den zwischen dem Umfangswandabschnitt 38 und der Mantelwand des Stutzens definierten Hohlraums 58 für das Fluid definiert. Das durch den Einlasskanal 50 und den Fluidkanal 56 in den Hohlraum 58 gelangte Fluid wird somit in spiralförmigen Windungen bis zum Grund des Spülvolumens 42 geleitet. Durch diese Führung erhält die Fluidströmung eine Komponente tangential zur Umfangswand des Spülvolumens, was die Erzeugung von Wirbeln in dem in das Spülvolumen eintretenden Fluid fördert.

In Fig. 2 sind darüber hinaus beispielhaft zwei Öffnungen 62 angedeutet, die den Umfangswandabschnitt 38 durchsetzen und damit das Spülvolumen 42 in Fluidkontakt mit dem Hohlraum 58 bringen. Die Öffnungen können die

Form von Düsen haben, durch die das Fluid mit großer Geschwindigkeit entweder tangential oder radial in das Spülvolumen eingespritzt wird.

## Patentansprüche

1. Vorrichtung (10) zum Anbringen eines Sensors (16) zur Analyse von Eigenschaften einer Substanz, insbesondere einer Flüssigkeit, an einem die Substanz enthaltenden Behältnis, umfassend:
einen Sensorträger (12), der fluiddicht an einem eine in einer Wand des Behältnisses ausgebildete Öffnung umgebenden Ansatz (22) befestigbar ist, wobei der Sensor (16) derart in dem Sensorträger (12) aufnehmbar ist, dass er über die Öffnung mit der Substanz in Kontakt gebracht werden kann,
wobei durch die Vorrichtung (10) ein in dem Sensorträger (12) ausgebildetes und mit dem Sensor (16) in Fluidverbindung stehendes Spülvolumen (42) vorgesehen ist, das von dem Behältnis abtrennbar ist sowie mit wenigstens einem an der Vorrichtung (10) vorgesehenen Spülfluideingang (50, 56) und wenigstens einem an der Vorrichtung (10) vorgesehenen Spülfluidausgang (54) in Fluidverbindung steht,
**dadurch gekennzeichnet, dass** der Spülfluideingang (50, 56) bei Betrachtung des am Ansatz (22) angeordneten Sensorträgers (12) in einen zwischen einer Wand (38) des Sensorträgers (12) und einer Wand des Ansatzes (22) gebildeten Hohlraum (58) mündet, der mit dem Spülvolumen (42) in Fluidverbindung steht.

2. Vorrichtung (10) nach Anspruch 1,
**dadurch gekennzeichnet, dass** zwischen der Wand (38) des Sensorträgers (12) und der Wand des Ansatzes (22) eine vorzugsweise als O-Ring-Dichtung ausgebildete Dichtung (60) vorgesehen ist, die den Hohlraum (58) gegenüber dem Innenraum des Behältnisses abdichtet.

3. Vorrichtung (10) nach einem der Ansprüche 1 oder 2,
**dadurch gekennzeichnet, dass** zwischen dem Sensorträger (12) und dem stirnseitigen Ende des Ansatzes (22) eine vorzugsweise als elastische Dichtung ausgebildete Dichtung (32) vorgesehen ist, die den Hohlraum (58) nach außen abdichtet.

4. Vorrichtung (10) nach einem der Ansprüche 1 bis 3,
**dadurch gekennzeichnet, dass** der Sensor (16) in einem rohrförmigen Gehäuse (14) aufgenommen ist, das fluiddicht in einen in dem Sensorträger (12) ausgebildeten rohrförmigen Hohlraum einführbar ist, wobei das rohrförmige Gehäuse (14) Sensorfenster (20) aufweist, durch die der Sensor (16) in Fluidkontakt mit der Substanz gelangen kann.

5. Vorrichtung (10) nach Anspruch 4,
**dadurch gekennzeichnet, dass** das ein im Spülvolumen (42) befindliches Spülfluid oder/und Kalibrationsfluid durch die Sensorfenster (20) mit dem der Sensor in Kontakt gelangen kann.

6. Vorrichtung (10) nach einem der Ansprüche 1 bis 5,
**dadurch gekennzeichnet, dass** das der Sensor (16) relativ zu dem Ansatz zwischen wenigstens zwei Stellungen verlagerbar ist, nämlich einer Messstellung, in der der Sensor (16) so weit durch die Öffnung in das Behältnis ragt, dass die Substanz in Kontakt mit dem Sensor (16) gelangen kann, und einer Spülstellung, in der der Sensor (16) so weit zurückgezogen ist, dass das Spülvolumen (42) von dem Behältnis isoliert ist.

7. Vorrichtung nach einem der Ansprüche 1 bis 5,
**dadurch gekennzeichnet, dass** der Sensor (16) relativ zum Ansatz (22) in einer einzigen Aufnahmestellung statisch gehalten ist.

8. Vorrichtung nach einem der Ansprüche 1 bis 7,
**dadurch gekennzeichnet, dass** der Ansatz (22) ein Schweißstutzen mit vorbestimmter Nennweite, z.B. 25 mm, ist.

9. Vorrichtung nach einem der Ansprüche 1 bis 8,
**dadurch gekennzeichnet, dass** der Sensorträger (12) an seinem an dem Ansatz (22) befestigten Ende einen Umfangswandabschnitt (38) aufweist, der einer Innenwand des Ansatzes (22) gegenüberliegt und der einen zwischen der Innenwand des Ansatzes (22) und dem Umfangswandabschnitt (38) gebildeten im Wesentlichen ringförmigen Spalt begrenzt, der den Hohlraum (58) bildet und in den der Spülfluideingang (50, 56) mündet

10. Vorrichtung nach einem der Ansprüche 1 bis 9,
**dadurch gekennzeichnet, dass** eingeleitetes Spülfluid oder/und Kalibrationsfluid in dem zwischen der Wand (38) des Sensorträgers (12) und der Wand des Ansatzes (22) gebildeten Hohlraum (58) in axialer Richtung des Ansatzes (22) bis in den der Außenwand des Behältnisses benachbarten Bereich, der den Grund des Spülvolumens (42) bildet, geleitet wird.

11. Vorrichtung nach einem der Ansprüche 1 bis 10,
**dadurch gekennzeichnet, dass** in dem zwischen der Wand (38) des Sensorträgers (12) und der Wand des Ansatzes (22) gebildeten Hohlraum (58) ein sich spiralförmig zum Grund des Spülvolumens (42) erstreckender Fluidkanal für Spülfluid oder/und Kalibrationsfluid gebildet ist.

12. Vorrichtung nach einem der Ansprüche 1 bis 11,
**dadurch gekennzeichnet, dass** in einem den Hohlraum (58) vom Spülvolumen (42) trennenden Wandabschnitt (38) des Sensorträgers (12) wenigstens eine Öffnung (62) gebildet ist, durch die Spülfluid oder/und Kalibrationsfluid in das Spülvolumen (42) gelangen kann.

13. Vorrichtung nach Anspruch 12,
**dadurch gekennzeichnet, dass** eine Mehrzahl von Öffnungen (62) in unterschiedlicher axialer Höhe zwischen dem Spülfluideingang (50, 56) und dem Grund des Spülvolumens (42) angeordnet sind.

14. Vorrichtung nach Anspruch 12 oder 13,
**dadurch gekennzeichnet, dass** die Öffnung(en) (62) düsenartig ausgebildet ist/sind.

15. Vorrichtung nach einem der Ansprüche 12 bis 14,
**dadurch gekennzeichnet, dass** die Öffnung(en) (62) wenigstens zum Teil radial nach innen weist/weisen.

16. Vorrichtung nach einem der Ansprüche 12 bis 15,
**dadurch gekennzeichnet, dass** die Öffnung(en) (62) wenigstens zum Teil in tangentiale Richtung weisen.

17. Vorrichtung nach einem der Ansprüche 1 bis 16,
**dadurch gekennzeichnet, dass** der Grund des Spülvolumens (42) eine konkave Wölbung hat.

## Claims

1. A device (10) for fixing a sensor (16) for analysing characteristics of a substance, in particular of a liquid, to a container containing the substance, comprising:
a sensor support (12), which may be fastened in fluid-tight manner to an attachment (22) surrounding an opening formed in a wall of the container,
the sensor (16) being capable of accommodation in the sensor support (12) in such a way that it may be brought into contact with the substance via the opening,
a rinsing space (42) formed in the sensor support (12) and in fluid connection with the sensor (16) being provided by the device (10), which rinsing space (42) is isolatable from the container and is in fluid connection with at least one rinsing fluid inlet (50, 56) provided on the device (10) and at least one
rinsing fluid outlet (54) provided on the device (10), **characterised in that**, on examination of the sensor support (12) arranged on the attachment (22), the rinsing fluid inlet (50, 56) leads into a cavity (58) formed between a wall (38) of the sensor support (12) and a wall of the attachment (22), which cavity is in fluid connection with the rinsing space (42).

2. A device (10) according to claim 1,
**characterised in that** a seal (60) preferably in the form of an 0-ring seal is provided between the wall (38) of the sensor support (12) and the wall of the attachment (22), which seal (60) seals the cavity (58) relative to the inside of the container.

3. A device (10) according to either one of claims 1 or 2,
**characterised in that** a seal (32) preferably in the form of a resilient seal is provided between the sensor support (12) and the end face of the attachment (22), which seal (32) seals the cavity (58) relative to the outside.

4. A device (10) according to any one of claims 1 to 3,
**characterised in that** the sensor (16) is accommodated in a tubular housing (14), which housing may be introduced in fluid-tight manner into a tubular cavity formed in the sensor support (12), the tubular housing (14) comprising sensor windows (20) through which the sensor (16) may come into fluid contact with the substance.

5. A device (10) according to claim 4,
**characterised in that** a rinsing fluid and/or calibrating fluid located in the rinsing space (42) may come into contact with the sensor by way of the sensor windows (20).

6. A device (10) according to any one of claims 1 to 5,
**characterised in that** the sensor (16) is displaceable relative to the attachment between at least two positions, namely a measuring position, in which the sensor (16) projects to such an extent through the opening into the container that the substance may come into contact with the sensor (16), and a rinsing position, in which the sensor (16) is withdrawn to such an extent that the rinsing space (42) is isolated from the container.

7. A device according to any one of claims 1 to 5,
**characterised in that** the sensor (16) is held statically in a single accommodation position relative to the attachment (22).

8. A device according to any one of claims 1 to 7,
**characterised in that** the attachment (22) is a welded connection piece of predetermined nominal width, for example 25 mm.

9. A device according to any one of claims 1 to 8,
**characterised in that** the sensor support (12) comprises at its end fastened to the attachment (22) a circumferential wall portion (38) which is located opposite an internal wall of the attachment (22) and defines a substantially annular gap formed between the internal wall of the attachment (22) and the circumferential wall portion (38), which gap forms the cavity (58) and leads into the rinsing fluid inlet (50, 56).

10. A device according to any one of claims 1 to 9,
**characterised in that** rinsing fluid and/or calibrating fluid introduced into the cavity (58) formed between the wall (38) of the sensor support (12) and the wall of the attachment (22) is conveyed in the axial direction of the attachment (22) as far as into the region adjacent the outer wall of the container, which region forms the base of the rinsing space (42).

11. A device according to any one of claims 1 to 10,
**characterised in that** a fluid channel for rinsing fluid and/or calibrating fluid extending helically to the base of the rinsing space (42) is formed in the cavity (58) formed between the wall (38) of the sensor support (12) and the wall of the attachment (22).

12. A device according to any one of claims 1 to 11,
**characterised in that** at least one opening (62) is formed in a wall portion (38) of the sensor support (12) separating the cavity (58) from the rinsing space (42), through which opening (62) the rinsing fluid and/or calibrating fluid may enter the rinsing space (42).

13. A device according to claim 12,
**characterised in that** a plurality of openings (62) are arranged at different axial heights between the rinsing fluid inlet (50, 56) and the base of the rinsing space (42).

14. A device according to claim 12 or claim 13,
**characterised in that** the opening(s) (62) is/are of nozzle-like configuration.

15. A device according to any one of claims 12 to 14,
**characterised in that** the opening(s) (62) is/are directed at least in part radially inwards.

16. A device according to any one of claims 12 to 15,
**characterised in that** the opening(s) (62) is/are directed at least in part in a tangential direction.

17. A device according to any one of claims 1 to 16,
**characterised in that** the base of the rinsing space (42) is curved concavely.

## Revendications

1. Dispositif (10) servant à appliquer un capteur (16) pour l'analyse des propriétés d'une substance, en particulier d'un liquide, au niveau d'un récipient contenant la substance, comportant :
un support de capteur (12), qui peut être fixé de manière étanche au fluide au niveau d'une saillie (22) entourant une ouverture réalisée dans une paroi du récipient, le capteur (16) pouvant être reçu dans le support de capteur (12) de telle sorte qu'il puisse être amené en contact avec la substance via l'ouverture, un volume de rinçage (42) se trouvant en liaison fluidique avec le capteur (16) et réalisé dans le support de capteur (12) étant prévu par le dispositif (10), lequel volume de rinçage peut être séparé du récipient et lequel volume se trouve également en liaison fluidique avec au moins une entrée de fluide de rinçage (50, 56) prévue sur le dispositif (10) et avec au moins une sortie de fluide de rinçage (54) prévue sur le dispositif (10),
**caractérisé en ce que** l'entrée de fluide de rinçage (50, 56), en faisant face au support de capteur (12) disposé sur la saillie (22), débouche dans un espace creux (58) formé entre une paroi (38) du support de capteur (12) et une paroi de la saillie (22), lequel espace creux se trouve en liaison fluidique avec le volume de rinçage (42).

2. Dispositif (10) selon la revendication 1,
**caractérisé en ce qu'**est prévu entre la paroi (38) du support de capteur (12) et la paroi de la saillie (22) un joint d'étanchéité (60) réalisé de préférence sous la forme d'un joint torique, lequel joint d'étanchéité étanchéifie l'espace creux (58) par rapport à l'espace intérieur du récipient.

3. Dispositif (10) selon l'une quelconque des revendications 1 ou 2,
**caractérisé en ce qu'**est prévu entre le support de capteur (12) et l'extrémité côté frontal de la saillie (22) un joint d'étanchéité (32) réalisé de préférence sous la forme d'un joint d'étanchéité élastique, lequel joint d'étanchéité étanchéifie l'espace creux (58) vers l'extérieur.

4. Dispositif (10) selon l'une quelconque des revendications 1 à 3,
**caractérisé en ce que** le capteur (16) est reçu dans un boîtier (14) de forme tubulaire, lequel boîtier peut être introduit de manière étanche au fluide dans un espace creux de forme tubulaire réalisé dans le support de capteur (12), le boîtier (14) de forme tubulaire présentant des fenêtres de capteur (20), à travers lesquelles le capteur (16) peut parvenir en contact fluidique avec la substance.

5. Dispositif (10) selon la revendication 4,
**caractérisé en ce qu'**un fluide de rinçage et/ou un fluide de calibrage se trouvant dans le volume de rinçage (42) peut parvenir en contact avec le capteur à travers les fenêtres de capteur (20).

6. Dispositif (10) selon l'une quelconque des revendications 1 à 5,
**caractérisé en ce que** le capteur (16) peut être déplacé par rapport à la saillie entre au moins deux positions, à savoir être déplacé dans une position de mesure, dans laquelle le capteur (16) dépasse dans le récipient à travers l'ouverture à une distance telle que la substance peut parvenir en contact avec le capteur (16), et une position de rinçage, dans laquelle le capteur (16) est retiré à une distance telle que le volume de rinçage (42) est isolé du récipient.

7. Dispositif selon l'une quelconque des revendications 1 à 5,
**caractérisé en ce que** le capteur (16) est maintenu de manière statique par rapport à la saillie (22) dans une position unique de réception.

8. Dispositif selon l'une quelconque des revendications 1 à 7,
**caractérisé en ce que** la saillie (22) est un raccord à souder avec un diamètre nominal prédéfini, par exemple un diamètre nominal de 25 mm.

9. Dispositif selon l'une quelconque des revendications 1 à 8,
**caractérisé en ce que** le support de capteur (12) présente, à son extrémité fixée au niveau de la saillie (22), une section de paroi périphérique (38), laquelle section fait face à la paroi intérieure de la saillie (22) et délimite une fente essentiellement en forme d'anneau formée entre la paroi intérieure de la saillie (22) et la section de paroi périphérique (38), laquelle fente forme l'espace creux (58) et dans laquelle débouche l'entrée de fluide de rinçage (50, 56).

10. Dispositif selon l'une quelconque des revendications 1 à 9,
**caractérisé en ce qu'**un fluide de rinçage introduit et/ou un fluide de calibrage est introduit dans l'espace creux (58) formé entre la paroi (38) du support de capteur (12) et la paroi de la saillie (22) dans une direction axiale de la saillie (22) jusque dans la zone adjacente à la paroi extérieure du récipient, laquelle zone forme le fond du volume de rinçage (42).

11. Dispositif selon l'une quelconque des revendications 1 à 10,
**caractérisé en ce qu'**est formé dans l'espace creux (58) formé entre la paroi (38) du support de capteur (12) et la paroi de la saillie (22) un canal de fluide s'étendant en spirale jusque dans le fond du volume de rinçage (42) pour un fluide de rinçage et/ou un fluide de calibrage.

12. Dispositif selon l'une quelconque des revendications 1 à 11,
**caractérisé en ce qu'**est formée dans la section de paroi (38) du support de capteur (12) séparant l'espace creux (58) du volume de vidange (42) au moins une ouverture (62) à travers laquelle du fluide de rinçage et/ou du fluide de calibrage peut parvenir dans le volume de rinçage (42).

13. Dispositif selon la revendication 12,
**caractérisé en ce qu'**une pluralité d'ouvertures (62) sont disposées à une hauteur axiale différente entre l'entrée du fluide de rinçage (50, 56) et le fond du volume de vidange (42).

14. Dispositif selon la revendication 12 ou 13,
**caractérisé en ce que** l'ouverture/les ouvertures (62) est/sont réalisée(s) à la manière de buses.

15. Dispositif selon l'une quelconque des revendications 12 à 14,
**caractérisé en ce que** l'ouverture/les ouvertures (62) est/sont orientée(s) au moins en partie radialement vers l'intérieur.

16. Dispositif selon l'une quelconque des revendications 12 à 15,
**caractérisé en ce que** l'ouverture/les ouvertures (62) est/sont orientée(s) au moins en partie dans une direction tangentielle.

17. Dispositif selon l'une quelconque des revendications 1 à 16,
**caractérisé en ce que** le fond du volume de rinçage (42) présente un bombement concave.
